# EUROPEAN PATENT APPLICATION

(11) **EP 3 828 768 A1**
(43) Date of publication of application: **02.06.2021**
(21) Application number: 19212266.1
(22) Date of filing: 28.11.2019
(51) Int. Cl.: G06K 9/62, G06K 9/00

(54) **METHOD FOR MODELING A BONE**

(71) Applicant: Digital Orthopaedics, 1435 Mont-Saint-Guibert (BE)
(72) Inventor: FERRÉ, Bruno, 34300 Agde (FR); DELEU, Paul-André, 3090 Overijse (BE); LEEMRIJSE, Thibaut, 1200 Woluwe-Saint-Lambert (BE); LÉTÉ, Édouard, 91190 Gif-sur-Yvette (FR); ROSEL, Sébastien, 78460 Chevreuse (FR)
(74) Representative: Icosa Europe

(57) **Abstract**

The present invention relates to a method for classifying a bone ensemble (Be) of a subject, comprising the steps of receiving (REC) and resizing (REZ) at least one image concerning the bone ensemble (Be); reconstructing (RECO) a tridimensional virtual model (VM_{R}) of the bone ensemble (Be) from the resized image; evaluating (EVAL_{C}) a level of complexity (L_{c}) of the shape of the virtual model (VM_{R}); according to the level of complexity (L_{c}) determining coordinates (COOR_{R}) of points located at the intersection of the surface of the reconstructed virtual model (VM_{R}) with three or more planes (COOR_{R}), so as to obtain a coordinate representation of the reconstructed virtual model; comparing (COM) the coordinate (COOR_{R}) to a corresponding coordinate representation of at least one tridimensional reference bone virtual model (VM_{REF}) comprised in a computer database (DB) wherein each reference bone virtual model (VM_{REF}) is associated to a bone class; identifying (ID), from said comparison, the closest reference bone virtual model (VM_{REF}) to the reconstructed virtual model (VM_{R}) and classify the reconstructed virtual model (VM_{R}) in the same bone class (Cb) of the closest reference bone virtual model (VM_{REF}); and storing (STO) a data set (DS) comprising the reconstructed virtual model (VM_{R}), its coordinate representation (COOR_{R}) and its bone class (Cb) in the computer database (DB).

## Description

### FIELD OF INVENTION

The present invention relates to the field of computational modeling. In particular, the present invention relates to the field of computational modeling and classification of anatomical structures, notably bones.

### BACKGROUND OF INVENTION

CT-scan and others standard tridimensional medical imaging technique, easily allow to obtain the bones geometry of a patient. Indeed, this imaging techniques provide multiple cross-sectional (tomographic) images of specific areas of a body. These bidimensional images are segmented so as to obtain tridimensional images of at least a portion of the skeleton structure. Nowadays, different software's are available for the generation of virtual model of the bone geometry and the modelling of soft tissue.

EP 2 929 509 B1 discloses methods and systems for automatic classification of images of internal structures of human bodies such as bones and soft tissues. The methods and systems of this patent aim to segment the images and identifying bones and soft tissue using a classifier. The classification method is implemented identically on all bones or bones ensembles to be reconstructed. However, depending on the type of bone or bone ensemble under analysis simpler methods could be used to reduce the computational cost.

In this context, there is the need of developing an easy and effective method which adapts to the bone or bone ensemble under analysis.

### SUMMARY

The present invention relates to a method for classifying a bone ensemble of a subject, comprising the steps of:
- receiving at least one image concerning the bone ensemble, obtained from medical imaging;
- resizing the at least one image with respect to a predefined reference image so as to obtain a resized image;
- reconstructing a tridimensional virtual model of the bone ensemble from the resized image;
- calculating a center of mass of the reconstructed virtual model;
- rotating the reconstructed virtual model in a predefined frame of reference according to a predefined alignment axis;
- evaluating a level of complexity of the shape of the virtual model;
when the level of complexity of the virtual model is lower than a predefined threshold:
- determining, for three planes in the predefined frame of reference, coordinates of points located at the intersection of the surface of the reconstructed virtual model with said planes, so as to obtain a coordinate representation of the reconstructed virtual model;
when the level of complexity of the virtual model is higher than a predefined threshold:
- determining, for at least four planes, being parallel to one another and orthogonal to a predetermined axis of the predefined frame of reference, coordinates of points located at the intersection of the surface of the reconstructed virtual model with said planes, so as to obtain a coordinate representation of the reconstructed virtual model;
- comparing the coordinate representation of the reconstructed virtual model to a corresponding coordinate representation of at least one tridimensional reference bone virtual model comprised in a computer database by aligning the center of mass of the reconstructed virtual model with the center of mass of the reference bone virtual model, wherein each reference bone virtual model is associated to a bone ensemble class and is oriented in the predefined frame of reference according to the predefined alignment axis;
- identifying, from said comparison, the closest reference bone virtual model to the reconstructed virtual model and classify the reconstructed virtual model in the same bone ensemble class of the closest reference bone virtual model;
- storing a data set comprising the reconstructed virtual model, its coordinate representation and its bone ensemble class in the computer database.

According to one embodiment, each reference bone virtual model of the database comprises medical information of the reference bone virtual model and the data set further comprises a copy of the medical information of the the closest reference bone virtual model.

According to one embodiment, the identification step comprises optimizing a cost function representative of a distance between the coordinate representation of the reconstructed virtual model and the corresponding coordinate representation of at least one reference bone virtual model stored in the computer database.

According to one embodiment, the three planes in the step of determining a coordinate representation of the reconstructed virtual model are orthogonal to one another.

According to one embodiment, in the step of the respective distances between two consecutive planes along the predetermined axis of the predefined frame of reference are all the same.

According to one embodiment, determining coordinates of points located at the intersection of the surface of the reconstructed virtual model with one plane is performed using a predetermined pitch.

According to one embodiment, the bone ensemble is a bone or plurality of bones comprised in a skeleton of at least one part of the subject.

According to one embodiment, in the resizing step the at least one image is resized by applying a homothety factor representative of a difference in size between the at least one image and the predefined reference image.

According to one embodiment, the medical information of one reference bone virtual model comprises multiple landmarks representing insertion points of a soft tissue structure associated to insertion coordinates and the method further comprises the steps of:
- positioning landmarks on the reconstructed virtual model according to the insertion coordinates of the closest reference bone virtual model, and optionally correcting the landmarks on the reconstructed virtual model to satisfy anatomic requirements, so as to obtain insertion coordinates of the reconstructed virtual model;
- storing in the computer database, with the data set of the reconstructed virtual model the insertion coordinates.

According to one embodiment, the soft tissue structure relates to tendons and/or ligaments.

According to one embodiment, the coordinates are polar coordinates.

The present invention further relates to a computer database associated to at least one type of bone, said computer database being updated by the method according to any one of the embodiments described hereabove.

The present invention further relates to a computer program comprising program code instructions which, when executed by a computer, cause the computer to carry out the method according to any one of the embodiments described hereabove.

The present invention further relates to a non-volatile computer storage medium comprising instructions which, when executed by a computer, cause the computer to carry out the method according to any one of the embodiments described hereabove.

### DEFINITIONS

In the present invention, the following terms have the following meanings:
- **"Soft tissues"** refers to the tissues that connect, support or surround other structures not being hard tissues as bone, such as articular cartilage, tendons, ligaments, fascia, skin, fibrous tissues, fat, and synovial membranes, muscles, nerves and blood vessels.
- **"Polar coordinates"** refers to a pair of coordinates locating the position of a point in a plane, the first being the length of the straight line (r) connecting the point to the origin, and the second the angle (θ) made by this line with a fixed line.

### BRIEF DESCRIPTION OF THE DRAWINGS

**Figure 1** shows a flow chart schematically illustrating one non-limiting example of a method for modeling a bone belonging to a limb, according the present invention.
**Figure 2** is a graphical representation of tridimensional virtual model of a bone and its center of mass.
**Figure 3** is a representation of the outlined intersection between of the surface of the reconstructed virtual model of **Figure 2** with one plane.
**Figure 4** is a representation of the outline of the surface of the reconstructed virtual model of **Figure 2** in the plane of intersection.
**Figure 5** is a schematic representation of polar coordinates originating in the center of mass.
**Figure 6** is schematic representation of constantly angularly spaced radii originating from a same origin and lying in a plane perpendicular to the axis.
**Figure 7** is schematic representation of the structure of Figure 6 repeated along the axis with a constant longitudinal pitch.
**Figure 8** is a visualization of the structure of **Figure 7** aligned along a longitudinal axis of a tridimensional virtual model of a bone seen from an observation point along the axis.
**Figure 9** shows the surface of the tridimensional virtual model of **Figure 8** on which the points of intersection with the structure are represented by the x symbols.

### REFERENCES

A - predetermined axis;
Be - bone ensemble;
Cb - bone class;
CM - center of mass;
CCM - step of calculating a center of mass of the reconstructed virtual model;
COM - step of comparing the coordinates of the reconstructed virtual model to the coordinates of at least one tridimensional reference bone virtual model comprised in the computer database;
COOR_{R} - coordinates representing the surface of the reconstructed virtual model;
COOR_{IN} - insertion coordinates of the reconstructed virtual model;
DB - data base
DEM_H - step of determining coordinates of points located at the intersection of the surface of the reconstructed virtual model with three planes;
DEM_L - step of determining coordinates of points located at the intersection of the surface of the reconstructed virtual model with at least four planes;
DS - data set;
EVALc - step of evaluating the level of complexity of the shape of the virtual model;
ID - step of identifying the closest reference bone virtual model to the reconstructed virtual model;
L_{c} - level of complexity of the shape of the virtual model;
P - plane;
POS - positioning landmarks on the reconstructed virtual model;
REC - step of receiving at least one image concerning the bone ensemble;
RECO - step of reconstructing a tridimensional virtual model of the bone ensemble from the resized image;
REZ - step of resizing the at least one image with respect to a predefined reference image so as to obtain a resized image;
ROT - step of rotating the reconstructed virtual model according to a predefined alignment axis;
STO - step of storing a data set formed by the reconstructed virtual model, its coordinate representation and its insertion coordinates in the computer database;
VM_{REF} - reference virtual model;
VM_{R} - reconstructed virtual model.

### DETAILED DESCRIPTION

The following detailed description will be better understood when read in conjunction with the drawings. For the purpose of illustrating, the method's steps are shown in the preferred embodiments. It should be understood, however that the application is not limited to the precise arrangements, structures, features, embodiments, and aspect shown. The drawings are not intended to limit the scope of the claims to the embodiments depicted. Accordingly, it should be understood that where features mentioned in the appended claims are followed by reference signs, such signs are included solely for the purpose of enhancing the intelligibility of the claims and are in no way limiting on the scope of the claims.

Features and advantages of the invention will become apparent from the following description of embodiments of a system, this description being given merely by way of example and with reference to the appended drawings in which:
The present invention relates to a method for classifying a bone ensemble B of a subject.

According to one embodiment, the bone ensemble B is a bone or plurality of bones comprised in a skeleton of at least one part of the subject. Said bone ensemble B may be for example a bone belonging to a limb notably a lower limb or the foot and ankle complex made up of the twenty-eight individual bones of the foot, together with the long-bones of the lower limb to form a total of thirty-three joints.

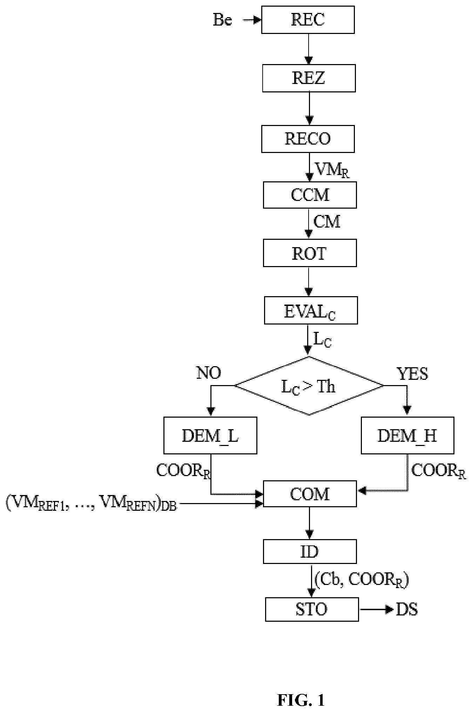

As shown in the block diagram of Figure 1, the present method may comprise a preliminary step consisting in the reception REC of a at least one image concerning the bone ensemble B, obtained from medical imaging and/or any other information relating to the anatomy of bone ensemble B. By means of non-limiting examples, the imaging data concerning the limb may be acquired by two-dimensional (2D) imaging technics such as radiography, ultrasounds, fluoroscopy, laser scan, photography, and the like; or by tri-dimensional (3D) imaging technics such as magnetic resonance imaging, computer tomography, laser scan, and the like. According to one embodiment, the information relating to the anatomy of the bone ensemble B of the subject is a static and/or a dynamic information.

According to one embodiment, the method comprises a step of resizing REZ the at least one image with respect to a predefined reference image so as to obtain a resized image. In one embodiment, in the resizing step REZ the at least one image is resized by applying a homothety factor representative of a difference in size between the at least one image and the predefined reference image. The resizing advantageously allows to make the bone ensemble dimensionless so that it is possible to use a unique referential for all bone ensemble B. In other words, this allows to compare the bone ensemble B belonging to two subjects having a sensible difference of height.

According to one embodiment, the method comprises a step of reconstructing RECO a tridimensional virtual model VM_{R} of the bone ensemble B from the resized image.

According to one embodiment, for the generation of the reconstructed virtual model VM_{R}, the at least one image of the subject is segmented obtaining information on the bone(s) geometry, and eventually soft tissue placement and anatomical characteristics.

In one embodiment, the reconstructed virtual model VM_{R} is defined by a lattice pattern which is the basic element of its geometric structure. The lattice pattern is based on nodes positions and struts connection between these nodes. There are many types of lattice structure patterns. The most used are the four following ones: cubic, octet-truss, hexa-truss, open-cell foam or diamond.

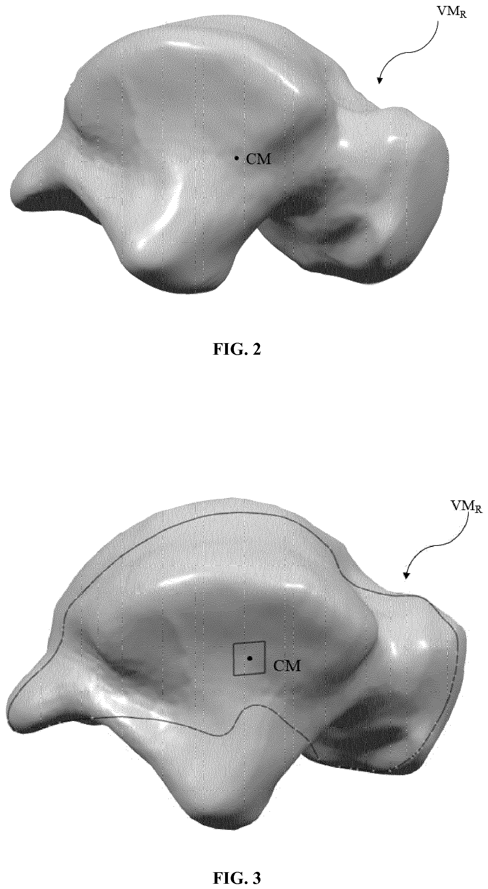

According to one embodiment, the method of the present invention comprises a step CCM of calculating the center of mass CM of each virtual model. An example of a reconstructed virtual model VM_{R} and its center of mass CM is represented in Figure 2. According to one embodiment, for the calculation of the center of mass CM, the reconstructed virtual model VM_{R} is considered to have uniform density. Alternatively, the reconstructed virtual model VM_{R} may comprise information concerning the distribution of density of the bone.

According to one embodiment, the reconstructed virtual model VM_{R} is rotated ROT according to a predefined alignment axis A. In one exemplary embodiment wherein the bone ensemble comprises one bone, the ROT step consists in the alignment of a longitudinal axis of the reconstructed virtual model VM_{R} to said predefined alignment axis A, where the longitudinal axis of the reconstructed virtual model VM_{R} is disposed along the largest dimension of the reconstructed virtual model VM_{R}. This step allows to align all the reconstructed virtual model VM_{R} and reference bone virtual models VM_{REF} of the database DB representing one type of bone ensemble B along a same direction.

According to one embodiment, the method of the present invention further comprises a step of evaluating EVALc a level of complexity L_{c} of the shape of the virtual model VM_{R}.

In order to estimate the level of complexity L_{c} a shape classifier may be use to classify the virtual model VM_{R} in one of the following shape classes of bones: long bones, short bones, flat bones, irregular bones and sesamoid bones. Each of these shape classes is then associated to a level of complexity L_{c}. For example, long bones, which are cylindrical in shape and longer than it is wide (i.e. humerus, ulna, radius, femur, tibia, fibula, metacarpals, phalanges, metatarsals, phalanges, etc.) and short bones, which are cube-like in shape and approximately equal in length, width, and thickness (i.e. bones in the carpals of the wrists and the tarsals of the ankles) may be associated to a low level of complexity L_{c}. Flat bones, which are typically thin and often curved (examples include the cranial bones, the scapulae, the sternum, and the ribs) and sesamoid bones which are small, round bone, may be associated to an intermediate level of complexity L_{c}. Finally, the irregular bone, which have any easily characterized shape and therefore does not fit any other classification, may be associated to a high level of complexity L_{c}.

According to one embodiment, the level of complexity L_{c} of the virtual model VM_{R} is evaluated from the different slice of a 3D CT-scan by delineating the bone ensemble B on each slice obtaining the boundaries of the bone ensemble on each slice and then comparing said boundaries among them. High level of complexity is then associated to high deviation between boundaries.

Alternatively, the level of complexity L_{c} of the virtual model VM_{R} may be estimated with algorithms based on information theory, curvature, multidimensional Similarity Structure Analysis or the like or any other algorithm known by the person skilled in the art.

According to one embodiment, the method comprises a step of determining for at least one plane P of a predefined spatially oriented frame, the coordinates COOR_{R} of points located at the intersection of the surface of the reconstructed virtual model VM_{R} with the plane P, so as to obtain a coordinate representation of the reconstructed virtual model VMR.

As shown in Figure 1, the method comprises, according to a preferred embodiment, a choice between two steps on the base of the level of complexity L_{c} of the shape of the virtual model VM_{R}. According to this embodiment, when the level of complexity L_{c} of the virtual model VM_{R} is lower than a predefined threshold Th the method implements a step consisting in determining DEM L, for three planes P in the predefined frame of reference, coordinates of points located at the intersection of the surface of the reconstructed virtual model VM_{R} with said planes COOR_{R}, so as to obtain a coordinate representation of the reconstructed virtual model. Inversely, when the level of complexity L_{c} of the virtual model VM_{R} is higher than a predefined threshold, the method is configured to implement the step of determining DEM H, for at least four planes P, being parallel to one another and orthogonal to a predetermined axis A of the predefined frame of reference, coordinates of points located at the intersection of the surface of the reconstructed virtual model VM_{R} with said planes COOR_{R}, so as to obtain a coordinate representation of the reconstructed virtual model VM_{R}. This embodiment advantageously allows to adapt the method to the type of bone ensemble that is under analysis so as to reduce the computational load for low complexity bone ensemble B.

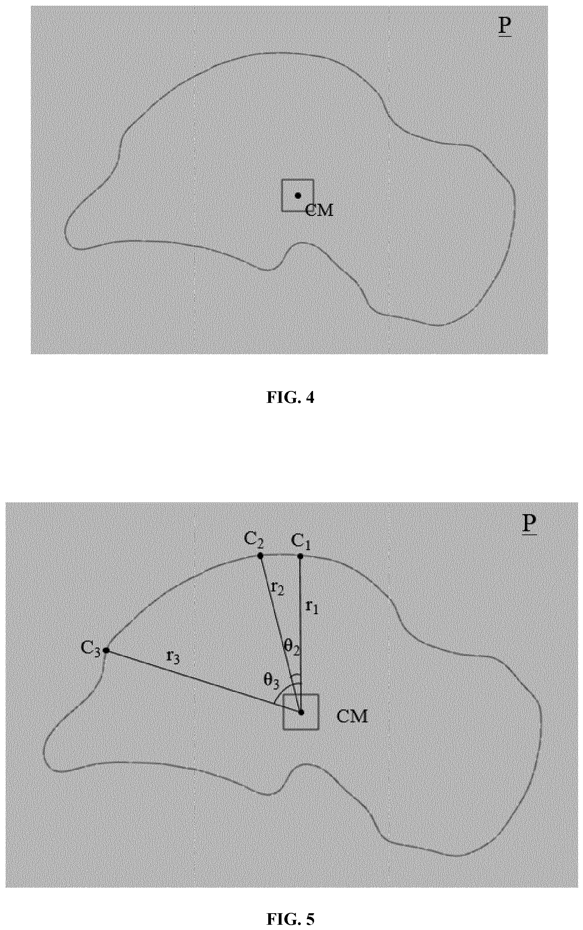

Figure 3 shows an example of the line of intersection between one plan P and one reconstructed virtual model VM_{R}. Figure 4 shows the cross-section of the reconstructed virtual model VM_{R} on the plane of intersection P.

According to one embodiment, all the planes P intersecting the reconstructed virtual model VM_{R} passes through its center of mass CM. This embodiment allows to obtain more comparable coordinates COOR_{R} for different reconstructed virtual models VM_{R}.

According to one embodiment, the three planes in the step of DEM L determining a coordinate representation of the reconstructed virtual model are orthogonal to one another. In this way a complex tridimensional structure can be represented by a restricted number of points distributed along a few planes. The use of orthogonal planes allows to reduce their number without losing in accuracy of discrimination between the different geometries of the virtual models.

According to one embodiment, in the step of DEM_H of the method, the respective distances between two consecutive planes along the predetermined axis A of the predefined frame of reference are all the same. According to one embodiment, the respective distances between two consecutive planes ranges between 0.5 mm and 50 mm.

According to one embodiment, the determination of the coordinates of points located at the intersection of the surface of the reconstructed virtual model with a plane COOR_{R} is performed using a predetermined pitch.

According to one embodiment, the coordinates COOR_{R} are polar coordinates. Figure 5 shows an example where three points C₁, C₂ and C₃ of the cross-section of the reconstructed virtual model VM_{R} on one plane of intersection P are represented using polar coordinates. In this example the center of mass CM belongs to the plane P and it is used as origin for the polar coordinates referential. The first coordinate r is the length of the straight line connecting the point C on the cross-section to the origin and the second coordinate θ is the angle made by this line with a fixed line, in this example r₁.

In one example, where the center of mass CM does not belong to the plane P, an orthogonal projection of the CM on the plane P may be used as origin for the determination of the coordinates COOR_{R}.

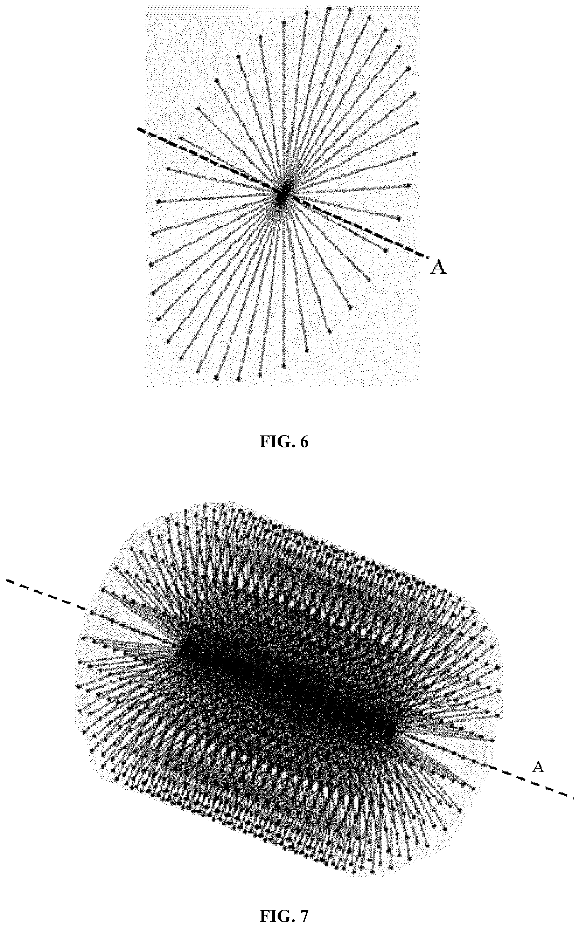

According to one embodiment, the determination of the coordinates of points located at the intersection of the surface of the reconstructed virtual model with a plane COOR_{R} is performed using a predetermined angular pitch, ranging between 2 and 15 degrees. A schematic representation of this embodiment is provided in Figure 6 which shows multiple equally spaced radii lying in a plane perpendicular to the predetermined axis A, where the radii originate from the point of intersection between the plane and the axis A.

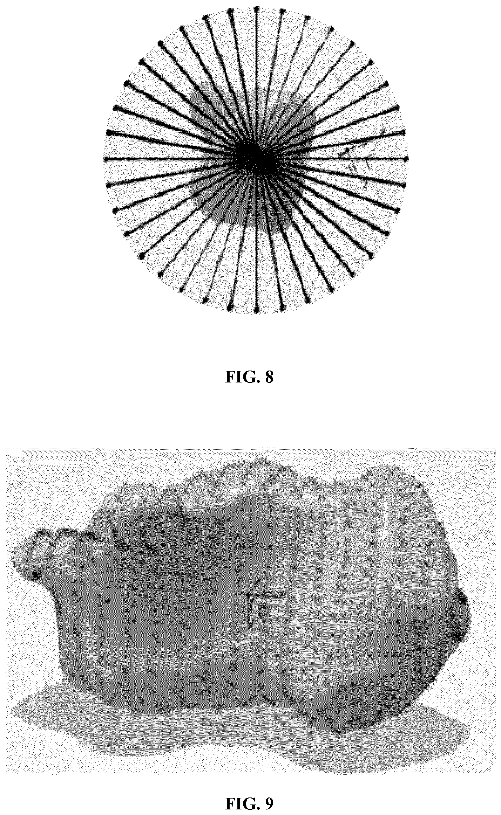

Figure 7 shows a succession of structures, as represented in Figure 6, repeated with a regular pitch along the axis A. Figure 8 shows a reconstructed virtual model VM_{R}, whose longitudinal axis have been aligned to the axis A. In this embodiment, multiple parallel planes, perpendicular to the longitudinal axis of the reconstructed virtual model VM_{R}, intersect the surface of the reconstructed virtual model VM_{R} and notably the radii of each plane P intersect the surface of the reconstructed virtual model VM_{R} in multiple points for which the polar coordinates COOR_{R} are determined. The determination of the coordinates COOR_{R} for all these intersection points allows to describe the surface of the reconstructed virtual model VM_{R}. The points of intersection with the radii for which the coordinates COOR_{R} are determined are represented on the surface of the reconstructed virtual model VM_{R} in Figure 9.

According to one embodiment, the method of the present invention comprises the step of comparing COM the coordinate representation of the reconstructed virtual model COOR_{R} to a corresponding coordinate representation of at least one tridimensional reference bone virtual model VM_{REF} comprised in a computer database DB. Each reference bone virtual model VM_{REF} is oriented in the predefined frame of reference according to the predefined alignment axis and is associated to a bone ensemble class Cb associated to the type of bone ensemble. For example, if the bone ensemble is one bone, the bone ensemble class Cb may be one of the following: humerus, ulna, radius, femur, tibia, fibula, metacarpals, phalanges, metatarsals, phalanges, etc. Alternative, if the bone ensemble is a plurality of bones comprised in a skeleton of at least one part of the subject, the bone ensemble class Cb may be one of the following: wrists, ankles, knee etc.

According to one embodiment, the comparison is performed aligning the center of mass CM of the reconstructed virtual model VM_{R} with the center of mass of the reference bone virtual model VM_{REF}, which have both the same orientation according to the predefined alignment axis in the predefined frame of reference.

According to one embodiment, the method further comprises a step of identifying ID, from the results of the comparison, the closest reference bone virtual model VM_{REF} to the reconstructed virtual model VM_{R} and classify the reconstructed virtual model VM_{R} in the same bone class Cb of the closest reference bone virtual model VM_{REF}.

According to one embodiment, the identification step ID comprises the optimization of a cost function representative of a distance between the coordinate representation of the reconstructed virtual model COOR_{R} and the corresponding coordinate representation of at least one reference bone virtual model stored in the computer database DB. In one example, the cost function is a least square or any other cost function known from the person skilled in the art.

According to one embodiment, the method comprises a step of storing STO a data set DS comprising the reconstructed virtual model VM_{R}, its coordinate representation COOR_{R} and its bone class Cb in the computer database DB.

According to one embodiment, each reference bone virtual model VM_{REF} of the database DB comprises medical information of the reference bone virtual model VM_{REF} and the data set DS to be stored in the data base DB further comprises a copy of the medical information of the the closest reference bone virtual model VM_{REF}. The medical information may comprise gender, age and any other demographic information concerning the subject, the state of health of the subject at the moment of the acquisition of the at least one image, information concerning the disease past or current of the subject such as for example osteoporosis and the related parameters like the bones mass. The medical information may further comprise information concerning fractures or surgeries.

According to one embodiment, the medical information of one reference bone virtual model VM_{R} further comprises multiple landmarks representing insertion points of a soft tissue structure associated to insertion coordinates COOR_{IN}. The soft tissue structure may relate to tendons and/or ligaments. The insertion points of the soft tissue may have been identified by analysis of medical images or a user. According to this embodiment, the method further comprises the steps of:
- positioning landmarks on the reconstructed virtual model POS according to the insertion coordinates COOR_{IN} of the closest reference bone virtual model VM_{REF}, so as to obtain insertion coordinates of the reconstructed virtual model COOR_{IN}; and
- storing in the computer database DB, with the data set DS of the reconstructed virtual model VM_{R} the insertion coordinates COOR_{IN}.

According to one embodiment, the method further comprises a step of correcting the landmarks on the reconstructed virtual model VM_{R} in order to satisfy anatomic requirements.

The present invention also relates to a computer database DB associated to at least one type of bone, said computer database DB being updated by the method according to any one of the embodiments cited hereabove.

The present invention also relates to a system for classifying a bone ensemble, the system comprising a data processing system comprising means for carrying out the steps of the method according to any one of the embodiments described hereabove.

According to one embodiment, the data processing system is a dedicated circuitry or a general purpose computer, configured for receiving the data and executing the operations described in the embodiment described above. According to one embodiment, the data processing system comprises a processor and a computer program. The processor receives digitalized input data and processes them under the instructions of the computer program to compute the simulation of the foot and ankle model. According to one embodiment, the computing device comprises a network connection enabling remote implementation of the method according to the present invention. According to one embodiment, input data are wirelessly communicated to the data processing device. According to one embodiment, the means used to visualize the output information wirelessly receives the output information from the data processing device.

The present invention further relates to a computer program product for classifying a bone ensemble, the computer program product comprising instructions which, when the program is executed by a computer, cause the computer to carry out the steps of the computer-implemented method according to anyone of the embodiments described hereabove.

Computer program code for carrying out operations for aspects of the present invention may be written in any combination of one or more programming languages, including an object oriented programming language such as Java, Python, Ruby, PHP, C++ or the like and conventional procedural programming languages, such as the "C" programming language or similar programming languages. The computer program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The computer program code may also be loaded onto a computer, other programmable data processing apparatus such as a tablet or phone, or other devices to cause a series of operational steps to be performed on the computer, other programmable apparatus or other devices to produce a computer other devices to produce a computer implemented process such that the program code which execute on the computer or other programmable apparatus provide processes for implementing the functions/acts specified in the flowchart and/or block diagram block or blocks.

The present invention further relates to a computer-readable storage medium comprising instructions which, when the program is executed by a computer, cause the computer to carry out the steps of the computer-implemented method according to anyone of the embodiments described hereabove. According to one embodiment, the computer-readable storage medium is a non-transitory storage medium.

Computer programs implementing the method of the present embodiments can commonly be distributed to users on a distribution computer-readable storage medium such as, but not limited to, an SD card, an external storage device, a microchip, a flash memory device and a portable hard drive. From the distribution medium, the computer programs can be copied to a hard disk or a similar intermediate storage medium. The computer programs can be run by loading the computer instructions either from their distribution medium or their intermediate storage medium into the execution memory of the computer, configuring the computer to act in accordance with the method of this invention. All these operations are well- known to those skilled in the art of computer systems.

While various embodiments have been described and illustrated, the detailed description is not to be construed as being limited hereto. Various modifications can be made to the embodiments by those skilled in the art without departing from the true spirit and scope of the disclosure as defined by the claims.

## Claims

1. A method for classifying a bone ensemble (B) of a subject, comprising the steps of:
- receiving (REC) at least one image concerning the bone ensemble (B), obtained from medical imaging;
- resizing (REZ) the at least one image with respect to a predefined reference image so as to obtain a resized image;
- reconstructing (RECO) a tridimensional virtual model (VM_{R}) of the bone ensemble (B) from the resized image;
- calculating (CCM) a center of mass (CM) of the reconstructed virtual model (VM_{R});
- rotating (ROT) the reconstructed virtual model (VM_{R}) in a predefined frame of reference according to a predefined alignment axis;
- evaluating (EVAL_{C}) a level of complexity (L_{c}) of the shape of the virtual model (VM_{R});
when the level of complexity (L_{c}) of the virtual model (VM_{R}) is lower than a predefined threshold (Th):
- determining (DEM_L), for three planes (P) in the predefined frame of reference, coordinates of points located at the intersection of the surface of the reconstructed virtual model (VM_{R}) with said planes (COOR_{R}), so as to obtain a coordinate representation of the reconstructed virtual model;
when the level of complexity (L_{c}) of the virtual model (VM_{R}) is higher than a predefined threshold:
- determining (DEM_H), for at least four planes (P), being parallel to one another and orthogonal to a predetermined axis (A) of the predefined frame of reference, coordinates of points located at the intersection of the surface of the reconstructed virtual model (VM_{R}) with said planes (COOR_{R}), so as to obtain a coordinate representation of the reconstructed virtual model (VM_{R});
- comparing (COM) the coordinate representation of the reconstructed virtual model (COOR_{R}) to a corresponding coordinate representation of at least one tridimensional reference bone virtual model (VM_{REF}) comprised in a computer database (DB) by aligning the center of mass (CM) of the reconstructed virtual model (VM_{R}) with the center of mass of the reference bone virtual model (VM_{REF}), wherein each reference bone virtual model (VM_{REF}) is associated to a bone ensemble class (Cb) and is oriented in the predefined frame of reference according to the predefined alignment axis;
- identifying (ID), from said comparison, the closest reference bone virtual model (VM_{REF}) to the reconstructed virtual model (VM_{R}) and classify the reconstructed virtual model (VM_{R}) in the same bone ensemble class (Cb) of the closest reference bone virtual model (VM_{REF});
- storing (STO) a data set (DS) comprising the reconstructed virtual model (VM_{R}), its coordinate representation (COOR_{R}) and its bone ensemble class (Cb) in the computer database (DB).

2. The method according to claim **1,** wherein each reference bone virtual model (VM_{REF}) of the database (DB) comprises medical information of the reference bone virtual model (VM_{REF}) and the data set (DS) further comprises a copy of the medical information of the the closest reference bone virtual model (VM_{REF}).

3. The method according to either one of claims **1** or **2,** wherein the identification step (ID) comprises optimizing a cost function representative of a distance between the coordinate representation of the reconstructed virtual model (COOR_{R}) and the corresponding coordinate representation of at least one reference bone virtual model stored in the computer database (DB).

4. The method according to any one of claims **1** to **3,** wherein the three planes in the step of (DEM_L) determining a coordinate representation of the reconstructed virtual model are orthogonal to one another.

5. The method according to any one of claims **1** to **4,** wherein in the step of (DEM_H) the respective distances between two consecutive planes along the predetermined axis (A) of the predefined frame of reference are all the same.

6. The method according to any one of claims **1** to **5,** wherein determining coordinates of points located at the intersection of the surface of the reconstructed virtual model with one plane (COOR_{R}) is performed using a predetermined pitch.

7. The method according to any one of claims **1** to **6,** wherein the bone ensemble (B) is a bone or plurality of bones comprised in a skeleton of at least one part of the subject.

8. The method according to any one of claims **1** to **7,** wherein in the resizing step (REZ) the at least one image is resized by applying a homothety factor representative of a difference in size between the at least one image and the predefined reference image.

9. The method according to any one of claims **2** to **8,** wherein the medical information of one reference bone virtual model (VM_{R}) comprises multiple landmarks representing insertion points of a soft tissue structure associated to insertion coordinates (COOR_{IN}) and the method further comprises the steps of:
- positioning landmarks on the reconstructed virtual model (POS) according to the insertion coordinates (COOR_{IN}) of the closest reference bone virtual model (VM_{REF}), and optionally correcting the landmarks on the reconstructed virtual model (VM_{R}) to satisfy anatomic requirements, so as to obtain insertion coordinates of the reconstructed virtual model (COOR_{IN});
- storing (STO) in the computer database (DB), with the data set (DS) of the reconstructed virtual model (VM_{R}) the insertion coordinates (COOR_{IN}).

10. The method according to claim **9,** wherein the soft tissue structure relates to tendons and/or ligaments.

11. The method according to any one of claims **1** to **10,** wherein the coordinates are polar coordinates.

12. A computer database associated to at least one type of bone, said computer database being updated by the method according to any one of claims **1** to **11.**

13. A computer program comprising program code instructions which, when executed by a computer, cause the computer to carry out the method according to any one of claims **1** to **11.**

14. A non-volatile computer storage medium comprising instructions which, when executed by a computer, cause the computer to carry out the method according to any one of claims **1** to **11.**
